# EUROPÄISCHE PATENTSCHRIFT

(11) **EP 1 557 659 B1**
(45) Veröffentlichungstag und Bekanntmachung des Hinweises auf die Patenterteilung: **02.04.2008**
(21) Anmeldenummer: 05100270.7
(22) Anmeldetag: 18.01.2005
(51) Int. Cl.: G01N 21/31, G01N 21/25, G01N 21/84

(54) **Verfahren zur Bestimmung des Flächengewichts einer Decklage einer Faserstoffbahn**
Method for determining the basis weight of a top sheet of a fibrous web
Méthode de détermination du grammage d' une feuille supérieure d'une bande fibreuse

(30) Priorität: 20.01.2004 DE 102004003042
(43) Veröffentlichungstag der Anmeldung: 27.07.2005
(73) Patentinhaber: Voith Patent GmbH, 89522 Heidenheim (DE)
(72) Erfinder: Ischdonat, Thomas, 89429, Bachhagel (DE); Münch, Rudolf, 89551, Königsbronn (DE)
(74) Vertreter: Kunze, Klaus

(56) Entgegenhaltungen:
- WO-A-01/23848
- WO-A-99/41590
- GB-A- 1 604 747
- US-A- 3 207 901
- US-A- 4 577 104
- US-A- 4 840 706
- US-B1- 6 229 612
- PATENT ABSTRACTS OF JAPAN Bd. 1999, Nr. 13, 30. November 1999 (1999-11-30) & JP 11 237377 A (YOKOGAWA ELECTRIC CORP), 31. August 1999 (1999-08-31)

## Beschreibung

Die Erfindung betrifft ein Verfahren zur Bestimmung des Flächengewichts der oberen Lage bzw. Decklage einer Faserstoffbahn sowie ein Verfahren zur Regelung des Flächengewichts.

Insbesondere bei der Herstellung von gedecktem Karton , z.B. Faltschachtel Karton, ist das Flächegewicht der Decklage ein entscheidendes Qualitätskriterium.

Ein Karton besteht üblicherweise aus einer oberen und einer unteren Decklage, zwischen denen eine oder mehrere Zwischenlagen angeordnet sind.

Eine Decklage wird üblicherweise aus gebleichter Cellulose oder anderen hochwertigen Fasern hergestellt und ist verantwortlich für das Erscheinungsbild und die Bedruckbarkeit des Kartons.

Eine Zwischenlage wird in der Regel aus minderwertigem Faserstoff hergestellt.

Da eine durchscheinende Zwischenlage das Erscheinungsbild und die Bedruckbarkeit des Kartons erheblich verschlechtert, muss die Decklage zumindest ein solches Flächengewicht haben, dass die Zwischenlagen nicht durchscheinen kann.

Ein zu hohes Flächengewicht der Decklage hat auf der anderen Seite einen zu hohen Einsatz von hochwertigen Fasern mit damit verbundenen Mehrkosten zur Folge.

Daher wurden in der Vergangenheit verschiedene Methoden vorgeschlagen, das Flächengewicht von Decklagen von Kartons zu bestimmen.

Aus dem Stand der Technik ist bekannt, das Flächengewicht über eine Helligkeitsmessung nach TAPPI T-452 zu ermitteln. Bei dieser Methode wird die relative Reflexion bei 457 nm gemessen. Da das Reflexionssignal bei dieser Methode unter anderem stark von optischen Aufhellern und Füllstoffen abhängig ist, kann eine Decklage trotz hoher TAPPI Helligkeit eine ungenügende Opazität aufweisen und damit die Zwischenlagen nur ungenügend abdecken.

Ein anderes Verfahren ist die Bestimmung der CIE Weiße der Decklage. Dieses Verfahren misst im gesamten sichtbaren Spektralbereich, ist aber ebenfalls abhängig von optischen Aufhellern und Füllstoffen.

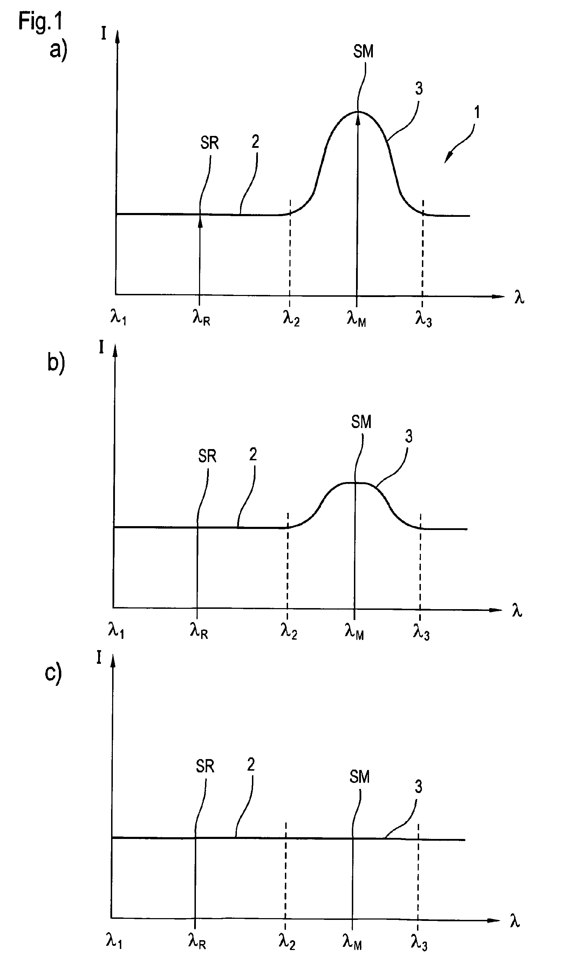

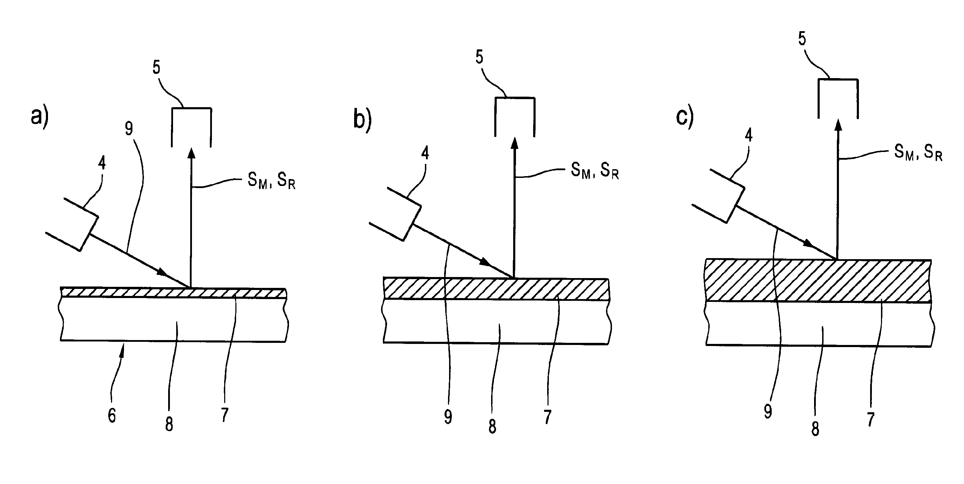

WO-A-9 941590 offenbart ein Verfahren zur Bestimmung der Menge einer Schicht (von z.B. Kalziumkarbonat oder Kaolin) auf einem sich bewegenden Papierbahnsubstrat durch Reflexionsmessung. Gemäß Fig. 1 wird ein Lichtstrahl 2 von einer Lichtquelle 1 emittiert, wobei dieser Strahl durch einen Filter 3 bei einer bestimmten Wellenlänge und danach durch ein Fenster 5 zur Papierbahn einer Papiermaschine gelangt. Die Schicht 4a liegt auf der Oberfläche der Bahn 4 und reflektiert den Lichtstrahl zu einem Detektor 7, dessen Ausgang mit einem Rechner 9 verbunden ist. Gemäß Fig. 2 stellt die Kurve C ein Reflexionsspektrum des Papiersubstrats dar und die Kurve D das Reflexionsspektrum des mit Kalziumkarbonat bedeckten Papiersubstrats. Ähnliches gilt für Fig. 2, die eine Bestimmung von der Menge von Kaolin anstelle von - Kalziumkarbonat darstellt. Gemessen wird die optische Absorption sowohl für Kalziumkarbonat als auch für Kaolin bei einer Mess- und einer Referenzwellenlänge.

Ausgehend von den aus dem Stand der Technik bekannten Verfahren, ist es die Aufgabe der vorliegenden Erfindung ein Verfahren und eine Vorrichtung zur Bestimmung des Flächengewichts vorzuschlagen, bei welchem das Flächengewicht nahezu unabhängig von z.B. optischen Aufhellern und Füllstoffen bestimmbar ist. Des weiteren ist es die Aufgabe der vorliegenden Erfindung ein Verfahren zur Regelung des Flächengewichts einer Faserstoffbahn vorzuschlagen.

Die Aufgabe wird erfindungsgemäß durch Verfahren mit den Merkmalen der Patentansprüche 1 und 13 gelöst.

Vorteilhafte Ausführungsformen und Weiterbildungen der Erfindung sind in den Unteransprüchen angegeben.

Der Erfindung geht von folgender Überlegung aus:

Besitzt eine zweite Lage einer Faserstoffbahn, die von einer ersten Lage ganz oder teilweise, d.h. durchscheinend bedeckt wird, bei zumindest zwei verschiedenen Wellenlängen unterschiedliche optische Eigenschaften, so kann durch Bestrahlung der Faserstoffbahn mit elektromagnetischer Strahlung und aus Vergleich der von der Faserstoffbahn bei den beiden Wellenlängen ausgesandten Signale ein Rückschluss auf das Flächengewicht der oberen ersten Lage gezogen werden, und zwar unabhängig von der Helligkeit der Beleuchtung der Fasestoffbahn oder von optischen Auffhellern oder dgl. in der Faserstoffbahn.

Die Erkenntnis beruht auf der Tatsache, dass aufgrund der unterschiedlichen optischen Eigenschaften der zweiten Lage bei den beiden Wellenlängen, die zweite Lage bei den beiden Wellenlängen unterschiedlich stark zu den integralen Signalen aus erster und zweiter Lage der Faserstoffbahn beiträgt.

Die vorliegende Erfindung macht sich diese Erkenntnis zunutze und schlägt daher ein Verfahren vor, demgemäß das Flächengewicht einer ersten Lage einer Faserstoffbahn, die eine zweite Lage der Faserstoffbahn bedeckt, mit folgenden Schritten bestimmt wird:
- Anordnen eines elektromagnetischen Senders und eines elektromagnetischen Empfängers auf der Seite der ersten Lage,
- Bestrahlen der Faserstoffbahn mit dem Sender bei zumindest einer charakteristischen Messwellenlänge und bei zumindest einer Referenzwellenlänge, wobei die zweite Lage bei der charakteristischen Messwellenlänge andere charakteristische optische Eigenschaften hat als bei der Referenzwellenlänge,
- Aufnehmen des bei der Messwellenlänge empfangenen Messignals und des bei der Referenzwellenlänge empfangenen Referenzsignals mit dem Empfänger,
- Ermittlung des Flächengewichts unter Verwendung des Vergleichs von Messignal und Referenzsignal.

Selbstverständlich kann die Faserstoffbahn bei einer oder mehreren diskreten Messwellenlängen bzw. Referenzwellenlängen sowie in einem Messwellenlängenbereich bzw. Referenzwellenlängenbereich bestrahlt werden. Des weiteren kann die Faserstoffbahn auch in einem Wellenlängenbereich bestrahlt werden, der eine oder mehrere Messwellenlängen bzw. einen Messwellenlängenbereich und eine oder mehrere Referenzwellenlängen bzw. einen Referenzwellenlängenbereich umfasst.

Nach einer besonders bevorzugten Ausführungsform der Erfindung weist die zweite Lage bei der Messwellenlänge ein höheres Reflexionsvermögen oder ein höheres Absoprtionsvermögen auf als bei der Referenzwellenlänge

Zwischenlagen gedeckter Kartons bestehen üblicherweise aus minderwertigen, ligninhaltigen Faserstoffen, wohingegen Decklagen in der Regel aus hochwertigen ligninfreien Faserstoffen bestehen.

Aus Untersuchungen ist bekannt, dass ligninhaltige Stoffe bei bestimmten charakteristischen Wellenlängen ein besonders hohes Reflexionsvermögen oder Absorptionsvermögen aufweisen.

Bedeckt nun die Decklage einer Faserstoffbahn die Zwischenlage nicht vollständig, so dass die Zwischenlage durchscheinen kann, so enthält das von der Faserstoffbahn auf den Empfänger treffende Messignal bei den charakteristischen Wellenlängen neben den Anteilen der Decklage einen besonders hohen Signalanteil von der Zwischenlage, d.h. hohen Refelxionsanteil bzw. hohen Absorptionsanteil der Zwischenlage.

Mit zunehmender Bedeckung der Zwischenlage durch die Deckschicht dominiert bei den charakteristrischen Wellenlängen mehr und mehr der Signalanteil der Deckschicht.

Die Zwischenlage bei den charakteristischen Wellenlängen liefert somit zum Messignal einen stark vom Flächengewicht der Decklage abhängigen Beitrag, der, abhängig vom Flächengewicht der Decklage, das Messignal dominieren kann oder nicht.

Bei Wellenlängen, die außerhalb den charakteristischen Wellenlängen liegen, d.h. bei Wellenlängen bei denen die Zwischenlage ein kleineres Reflexionsvermögen /Absorptionsvermögen hat als bei den charakteristischen Wellenlängen, wird das Messignal, unabhängig vom Flächengewicht der Decklage, weniger stark durch die Zwischenlage geprägt als bei den charakteristischen Wellenlängen, d.h. es besteht eine geringere Abhängigkeit des Messignals von der Zwischenlage als bei den charakteristischen Wellenlängen.

Die Zwischenlage liefert bei den Wellenlängen außerhalb den charakteristischen Wellenlängen somit zum Messignal einen im Wesentlichen vom Flächengewicht der Decklage unabhängigen Beitrag, der, unabhängig vom Flächengewicht der Decklage, das Messignal nicht dominiert.

Bei dem erfindungsgemäßen Verfahren wird somit zumindest bei einer charakteristischen Wellenlänge ein Messignal detektiert, welches einen stark vom Flächengewicht der Deckschicht abhängigen Beitrag aufweist. Um den Beitrag der Zwischenschicht und damit ein Maß für das Flächengewicht der Deckschicht unabhängig von bspw. Helligkeitsgrad der Deckschicht bedingt durch optische Aufheller und / oder Füllstofffe zu ermittelt, wird das Messignal mit einem Referenzsignal bei einer Wellenlänge außerhalb der charakteristischen Wellenlängen verglichen bspw. auf dieses normiert.

Nach einer bevorzugten Ausführungsform der Erfindung wird die Faserstoffbahn in einem Messwellenlängenbereich und / oder in einem Referenzwellenlängenbereich bestrahlt. Dies bedeutet, dass die Faserstoffbahn mit einem Spektrum an elektromagnetischer Strahlung bestrahlt wird, welches sich vom anfang bis zum Ende des Messwellenlängenbereichs und / oder des Referenzwellenlängenbereichs erstreckt, und dass die im Messwellenlängenbereich empfangenen Messignale und die im Referenzwellenlängenbereich empfangenen Referenzsignale mit dem Empfänger empfangen werden, und anschließend das Flächengewicht unter Verwendung des Vergleichs der Messignale mit den Referenzsignalen ermittelt wird.

Hierbei bezeichnet Messwellenlängenbereich einen Wellenlängenbereich, in dem die zweite Lage der Faserstoffbahn andere optische Erigenschaften aufweist als in dem Wellenlängenbereich, der als Referenzwellenlängenbereich bezeichnet wird.

Nach einem bevorzugten Ausführungsbeispiel der Erfindung liegt der Messwellenlängenbereich zwischen 550 und 620 nm, insbesondere zwischen 570 nm und 590 nm. Aus Untersuchungen ist bekannt, dass ligninhaltige Stoffe in diesem Wellenlängenbereich ein gegenüber anderen Wellenlängenbereichen deutlich erhöhtes Reflexionsvermögen aufweisen.

Aus Untersuchungen ist des weiteren bekannt, dass ligninhaltige Stoffe aromatische Strukturen und somit Absorptionsbanden im UV Spektralbereich besitzen. Die Absorptionsbanden liegen bspw. bei 280 nm und bei 310 nm. Demzufolge sieht eine bevorzugte Ausführungsform der Erfindung vor, dass Messwellenlängen im Bereich von 280 nm und / oder im Bereich von 310 nm liegen.

Ligninhaltige Stoffe besitzen darüber hinaus im Infra-Roten (IR)-Spektralbereich Absorptionsbanden. IR-Strahlung dringt weiter in Deckschichten mit größeren Flächengewichten ein, als Strahlung des UV oder sichtbaren Spektralbereichs. Demzufolge sieht eine bevozugte Ausführungform der Erfindung vor, dass der Messwellenlängenbereich im IR-Spektralbereich liegt.

Selbstverständlich sind auch Kombinationen der oben aufgezählten Messwellenlängen bzw. Messwellenlängenbereiche möglich.

Nach einer weiteren Ausführungsform der Erfindung liegt der Referenzwellenlängenbereich im sichtbaren blauen Spektralbereich.

Eine weitere bevorzugte Ausführungsform des erfindungsgemäßen Verfahrens sieht vor, dass das Flächengewicht (FLG) unter Verwendung der Formel FLG=A*exp(-YI*B) ermittelt wird, wobei A und B gerätespezifische Konstanten sind und YI der Wert ist, der durch Vergleich von Referenzsignal und Messignal ermittelt wird.

Es gibt mehrere Möglichkeiten den Wert YI zur Brechnung des Flächengewichts zu bestimmen. Eine Möglichkeit sieht vor, dass der Wert YI durch Quotientenbildung von Referenzsignal und Messignal ermittelt wird.

Die meisten gebräuchlichen Spektralfotometer sind derart ausgelegt, dass diese die Normfarbwerte X, Y und Z aus den gemessenen Reflexionsspektren der Probe ermitteln. Demzufolge ist es vorteilhaft, wenn die ermittelten Normfarbwerte zur Berechnung des Wertes YI verwendet werden.

Eine besonders bevorzugte Ausführungsform der Erfindung sieht desshalb vor, dass der Wert YI aus den Normfarbwerten Y und Z mit der Formel YI~(Y-Z)/Y (Gelb-Index nach ASTM E-313 Standard) ermittelt wird. Bei der Ermittlung des YI Wertes nach dem ASTM E-313 Standard, stellt der YI Wert den sog. Gelb-Index der Probe dar, wobei vom Normfarbwert mit Maximum im gelb-orangen Spektralbereich der Normfarbwert mit Maximum im blauen Spektralbereich abgezogen wird.

Die Berechnung des YI Wertes nach ASTM E-313 Standard ist bei der Auswertung eines Messwellenlängenbereichs zwischen 550 und 620 nm, insbesondere zwischen 570 nm und 590 nm sinnvoll.

In Versuchen hat sich gezeigt, dass von einem ausreichenden Flächengewicht der Decklage auszugehen ist, wenn der Gelb-Index < 1 ist.

Der Messwellenlängenbereich zwischen 550 und 620 nm, insbesondere zwischen 570 nm und 590 nm liegt im Bereich des Maximum der Normfarbwertfunktion X, wohingegen dieser Wellenlängenbereich außerhalb des Maximum der Normfarbwertfunktion Y liegt. Zur Verbesserung des Signal zu Rausch Verhältnisses ist es daher sinnvoll, wenn der Wert YI mit den Normfarbwerten X, Y und Z mit der Formel YI~(Cx*X-Cy*Z)/Y ermittelt wird, wobei Cx und Cy gerätespezifische Konstanten sind.

Um das Flächengewicht besonders genau bestimmen zu können, ist es durchaus auch sinnvoll, wenn zur Ermittlung des Flächengewichts Statusinformationen der bahnverarbeitenden Maschine und / oder Maschinenparamenter der bahnverarbeitenden Maschine herangezogen werden. Eine bevorzugte Ausführungsform der Erfindung sieht desshalb vor, dass das Flächengewicht unter Verwendung von Statusinformationen und /oder von Maschinenparametern der bahnverarbeitenden Maschine ermittelt wird. Als Statusinformation kann bspw. der aktuelle Stoffauflaufdurchfluss bezeichnet werden. Als Maschinenparameter ist bspw. die eingestellte Maschinengeschwindigkeit zu betrachten.

Des weiteren soll durch die vorliegende Erfindung ein Verfahren zur Regelung des Flächengewichts einer Faserstoffbahn vorgeschlagen werden, welches zur Regelung des Flächengewichts unter anderem das vorher beschriebene erfindungsgemäße Verfahren zur Bestimmung des Flächengewichts verwndet.

Gemäß dem Verfahren zur Regelung des Flächengewichts einer Lage einer Faserstoffbahn ist vorgesehen, dass das Flächengewicht an mehreren Stellen in MD und / oder in CD Richtung mit einem Verfahren nach einem der Ansprüche 1 bis 12 bestimmt wird, und eine Regelungseinheit unter anderem auf Basis des ermittelten Flächengewichts Steuersignale an einen oder mehrere Aktuatoren ausgibt.

Gemäß einer bevorzugten Ausführungsform der Erfindung ist ein Aktuator oder sind mehrere Aktuatoren vorgesehen, die das Verdünnungswasser des Stoffauflaufs, Einstellungen der Blenden und / oder Lippen des Stoffauflaufs oder dgl. regeln.

Nachfolgend wird die Erfindung anhand der folgenden schematischen Zeichnungen weiter erläutert. Es zeigen:
- Figur 1: relative Intensität des von der Faserstoffbahn reflektierten Lichts in Abhängigkeit von der Wellenlänge bei verschiedenen Flächengewichten einer Decklage,
- Figur 2: Messaufbau zur Durchführung des erfindungsgemäßen Verfahrens,
- Figur 3: Gelb-Index im Querprofil einer Faserstoffbahn,
- Figur 4: Papiermaschine mit Regelungsfluss zur Einstellung des Flächengewichts.

Die Figur 1 zeigt die relative Intensität des von einer Faserstoffbahn 6 reflektierten Lichts in Abhängigkeit von der Wellenlänge bei verschiedenen Flächengewichten einer Decklage 7 (siehe auch Figur 2).

Die in der Figur 1 dargestellte Kurve 1 stellt das integrale Reflexionssignal aus der Überlagerung der Reflexionssignale der ersten bzw. Decklage 7 und der zweiten bzw. Zwischenlage 8 der Faserstoffbahn 6 dar. Die Kurve 1 wird durch Addition der Normfarbwerte X, Y und Z und anschließende Multiplikation der Summe mit der Beleuchtungsfunktion des als Lichtquelle ausgebildeten Senders 4 erhalten.

Die Kurve 1 weist Kurvenbereiche 2 und 3 auf.

Der Kurvenbereich 2 erstreckt sich im Wellenlängenbereich λ1 bis λ2 sowie λ größer λ3, verläuft horizontal und zeigt die Wellenlängenbereiche mit gleicher Intensität an. Im vorliegenden Ausführungsbeispiel bilden die Reflexionssignale der ersten und der zweiten Lage im Kurvenbereich 2 einem im wesentlichen weißen oder grauen Untergrund.

Der Kurvenbereich 3 verläuft im Wellenlängenbereich λ2 bis λ3 und zeigt, abhängig vom Flächengewicht der ersten Lage, einen peakförmigen Verlauf mit einer gegenüber dem Kurvenbereich 2 erhöhter bzw. gleichen Intensität.

Im Kurvenbereich 3 hat die zweite Lage folglich einen gegenüber dem Kurvenbereich 2 signifikant erhöhten Reflexionsgrad.

Erfindungsgemäß wird die Messwellenlänge λM so gewählt, dass diese im Kurvenbereich 3 liegt. Es ist aber auch denkbar, einen Messwellenlängenbereich zu wählen, der sich von der Wellenlänge λ2 bis zur Wellenlänge λ3 erstreckt. Im vorliegenden Ausführungsbeispiel liegt die Messwellenlänge λM bei einer Wellenlänge im Bereich zwischen 570 nm und 590 nm oder der Messwellenlängenbereich zwischen 570 nm und 590 nm. Ferner wird erfindungsgemäß die Referenzwellenlänge λR so gewählt, dass diese innerhalb des Kurvenbereichs 2 liegt. Es ist aber auch denkbar, einen Referenzwellenlängenbereich zu wählen, der sich bspw. von der Wellenlänge λ1 bis zur Wellenlänge λ2 erstreckt.

In der Figur 1a weist die erste Lage der Faserstoffbahn ein geringes Flächengewicht auf, d.h. die zweite Lage der Faserstoffbahn ist nur gering mit der ersten Lage bedeckt. Desshalb zeigt die Figur 1a ein Messignal SM mit hoher Intensität gegenüber dem Referenzsingnal SR.

In der Figur 1b ist das Flächengewicht der ersten Lage gegenüber dem Flächgewicht in Figur 1a erhöht. Demzufolge ist der Signalbeitrag der zweiten Lage zum Gesamtsignal im Kurvenbereich 3 reduziert. Demzufolge ist das Intensitätsverhältnis zwischen dem Messignal SM und dem Referenzsignal SR gegenüber dem in Figur 1a deutlich reduziert.

In der Figur 1c ist das Flächengewicht der ersten Lage soweit erhöht, dass im Kurvenbereich 3 kein dominierender Signalbeitrag der zweiten Lage mehr zu beobachten ist. Das Reflexionssignal setzt sich wie das Reflexionssignal in Kurve 2 zusammen. Das Messignal SM und das Referenzsignal SR haben die gleiche Intensität.

Die Figur 2 zeigt einen Messaufbau zur Durchführung des erfindungsgemäßen Verfahrens in Seitenansicht. Wie in der Figur 2 zu erkennen ist, weißt der Messaufbau einen Sender 4 und einen Empfänger 5 zum Senden und Empfangen von Licht 9 auf. Der Sender 4 sendet Licht 9 zumindest bei einer Messwellenlänge λM bzw. in einem Messwellenlängenbereich und bei einer Referenzwellenlänge λR bzw. in einem Referenzwellenlängenbereich aus. Im vorliegenden Ausführungsbeispiel wird bei den beiden Wellenlängen von der Faserstoffbahn 6 ein Messignal SM und ein Referenzsignal SR in den Empfänger 5 reflektiert bzw. gestreut.

Das Messignal SM und das Referenzsignal SR setzen sich jeweils aus Anteilen zusammen, die von der Decklage 7 und von der Zwischenlage 8 reflektiert wurden.

Das Messignal SM hat hierbei, abhängig vom Flächengewicht der Decklage 7, einen deutlich variierenden Signalanteil der Zwischenlage 8, die bei der Messwellenlänge λM bzw. im Messwellenlängenbereich ein gegenüber der Referenzwellenlänge λR bzw. dem Referenzwellenlängenbereich signifikant höheres Refelxionsvermögen hat.

Die Figuren 2a bis 2c zeigen hierbei unterschiedliche Flächengewichte der Decklage 7 in Korrelation zu den Intensitätsspektren der Figuren 1a bis 1c.

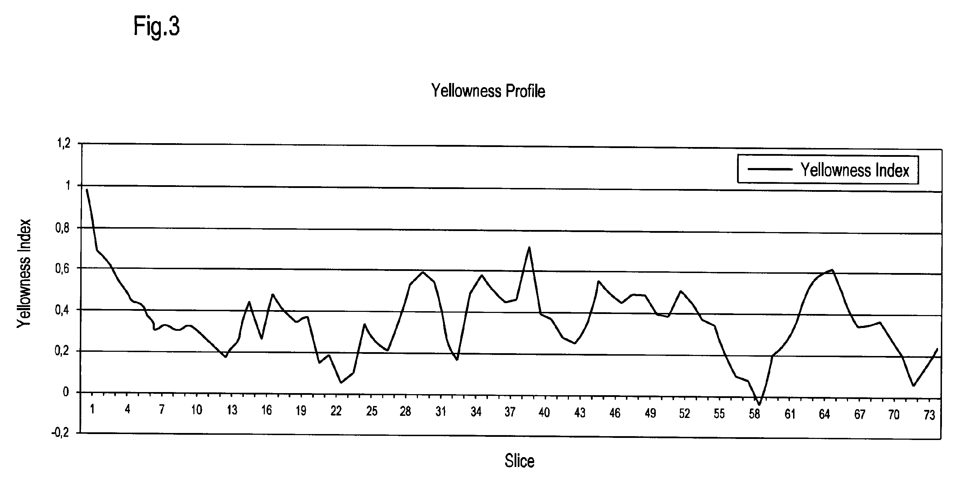

Die Figur 3 zeigt den Gelb-Index einer Faserstoffbahn im Querprofil bei einem für die Bedeckung der zweiten bzw. Zwischenlage außreichenden Flächengewicht der ersten bzw. Decklage. Wie aus der Figur 3 zu erkennen ist, ist der Gelb-Index über die gesamte Bahnbreite der Faserstoffbahn kleiner 1, was wie eigene Untersuchungen gezeigt haben, mit einem Flächengewicht der Decklage für ein außreichende Bedeckung der Zwischenlage korreliert.

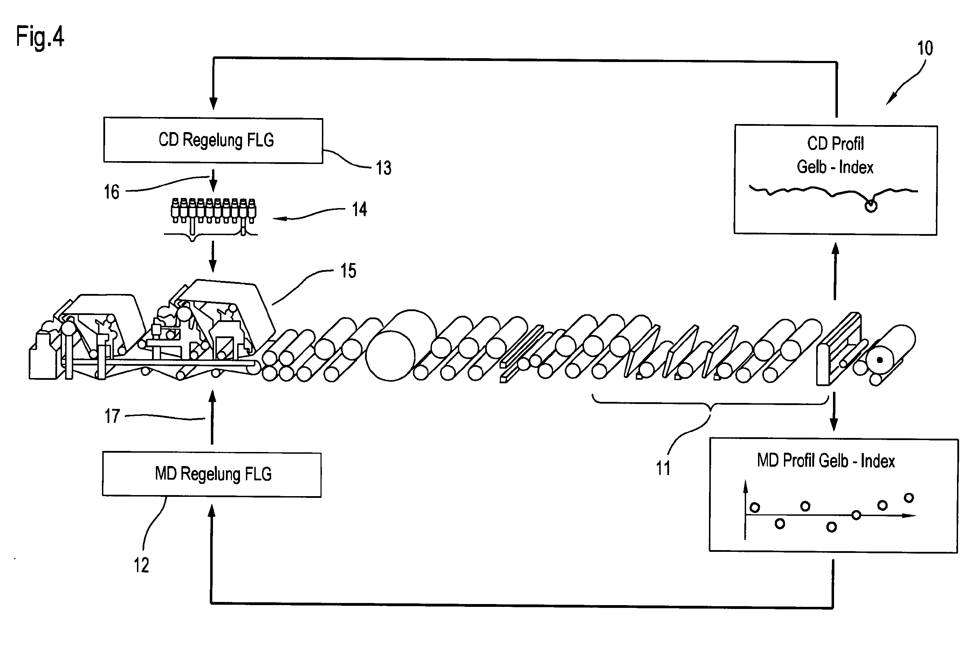

Die Figur 4 zeigt in stark vereinfachter perspektivischer Darstellung eine Papiermaschine 10 zur Herstellung von Karton mit Regelungsfluss zur Einstellung des Flächengewichts. Am Ende der Trockenpartie 11 wird das Flächengewicht in CD und das Flächengewicht in MD Richtung bestimmt und das Ergebnis an Regelungseinheiten 12, 13 übermittelt, welche entsprechende Aktuatoren 14 im Bereich des Stoffauflaufs der Formierpartie 15 der Decklage mittels Steuersignalen 16, 17 ansteuern. Als Aktuatoren 14 kommen bspw. Aktuatoren zur Einstellung des Verdünnungswassers, zur Blenden- oder Lippenverstellung in Betracht.

### Bezugszeichenliste:

- 1: Kurve
- 2: Kurvenbereich
- 3: Kurvenbereich
- 4: Sender
- 5: Empfänger
- 6: Faserstoffbahn
- 7: Decklage
- 8: Zwischenlage
- 9: Licht (einfallend)
- 10: Kartonmaschine
- 11: Trockenpartie
- 12: Regelungseinheit (MD-Richtung)
- 13: Regelungseinheit (CD-Richtung)
- 14: Aktuator
- 15: Formierbereich
- SM: Messignal
- SR: Referenzsignal
- λM: Messwellenlänge / Messwellenlängenbereich
- λR: Referenzwellenlänge / Referenzwellenlängenbereich

## Patentansprüche

1. Verfahren zur Bestimmung des Flächengewichts (FLG) einer ersten Lage (7) einer Faserstoffbahn (6), die eine zweite Lage (8) der Faserstoffbahn (6) bedeckt, mit folgenden Schritten:
- Anordnen eines elektromagnetischen Senders (4) und eines elektromagnetischen Empfängers (5) auf der Seite der ersten Lage (7),
- Bestrahlen der Faserstoffbahn (6) mit dem Sender (4) bei zumindest einer charakteristischen Messwellenlänge (λM) und bei zumindest einer Referenzwellenlänge (λR), wobei die zweite Lage bei der charakteristischen Messwellenlänge (λM) andere charakteristische optische Eigenschaften hat als bei der Referenzwellenlänge (λR),
- Aufnehmen des von der Faserstoffbahn (6) bei der Messwellenlänge (λM) zurückgesendeten Messignals (SM) und des bei der Refrenzwellenlänge (λR) zurückgesendeten Referenzsignals (SR) mit dem Empfänger (5),
- Ermittlung des Flächengewichts (FLG) unter Verwendung des Vergleichs von Messignal (SM) und Referenzsignal (SR).

2. Verfahren nach Anspruch 1,
**dadurch gekennzeichnet,**
**dass** die zweite Lage (8) bei der Messwellenlänge (λM) ein höheres Reflexionsvermögen oder Absoprtionsvermögen hat als bei der Refrenzwellenlänge (λR).

3. Verfahren nach Anspruch 1 oder 2,
**dadurch gekennzeichnet,**
**dass** die Faserstoffbahn in einem Messwellenlängenbereich (λM) und / oder in einem Refrenzwellenlängenbereich (λR) bestrahlt wird.

4. Verfahren nach einem der Ansprüche 1 bis 3,
**dadurch gekennzeichnet,**
**dass** der Messwellenlängenbereich (λM) zwischen 570 und 590 nm liegt.

5. Verfahren nach einem der Ansprüche 1 bis 4,
**dadurch gekennzeichnet,**
**dass** Messwellenlängen (λM) bei 280 nm und bei 310 nm liegen.

6. Verfahren nach einem der Ansprüche 1 bis 5,
**dadurch gekennzeichnet,**
**dass** der Messwellenlängenbereich (λM) im IR Spektralbereich liegt.

7. Verfahren nach einem der Ansprüche 1 bis 6,
**dadurch gekennzeichnet,**
**dass** der Referenzwellenlängenbereich (λR) im blauen Spektralbereich liegt.

8. Verfahren nach einem der Ansprüche 1 bis 7,
**dadurch gekennzeichnet,**
**dass** das Flächengewicht (FLG) unter Verwendung der Formel FLG=A*exp(-YI*B) ermittelt wird, wobei A und B gerätespezifische Konstanten sind und YI der Wert ist, der durch Vergleich von Referenzsignal (SR) und Messignal (SM) ermittelt wird.

9. Verfahren nach einem der Ansprüche 1 bis 8,
**dadurch gekennzeichnet,**
**dass** der Wert YI durch Quotientenbildung von Referenzsignal (SR) und Messignal (SM) ermittelt wird.

10. Verfahren nach einem der Ansprüche 1 bis 9,
**dadurch gekennzeichnet,**
**dass** der Wert YI aus den Normfarbwerten Y und Z mit der Formel YI~(Y-Z)/Y (Gelb-Index nach ASTM E-313 Standard) ermittelt wird.

11. Verfahren nach einem der Ansprüche 1 bis 9,
**dadurch gekennzeichnet,**
**dass** der Wert YI aus den Normfarbwerten X, Y und Z mit der Formel YI~(Cx*X-Cy*Z)/Y ermittelt wird, wobei Cx und Cy gerätespezifische Konstanten sind.

12. Verfahren nach einem der Ansprüche 1 bis 11,
**dadurch gekennzeichnet,**
**dass** das Flächengewicht (FLG) unter Verwendung von Statusinformationen und von Maschinenparametern ermittelt wird.

13. Verfahren zur Regelung des Flächengewichts (FLG) einer Lage (7) einer Faserstoffbahn (6), wobei das Flächengewicht (FLG) an mehreren Stellen in MD und / oder in CD Richtung mit einem Verfahren nach einem der Ansprüche 1 bis 12 bestimmt wird, und wobei eine Regelungseinheit (12, 13) unter anderem auf Basis des ermittelten Flächengewichts (FLG) Steuersignale (16, 17) an einen oder mehrere Aktuatoren (14) ausgibt.

14. Verfahren zur Regelung nach Anspruch 13,
**dadurch gekennzeichnet,**
**dass** der oder die Aktuatoren (14) das Verdünnungswasser des Stoffauflaufs und /oder die Einstellung der Blenden und / oder Lippen des Stoffauflaufs regeln.

## Claims

1. Method for determining the basis weight (FLG) of a first layer (7) of a fibrous web (6), which covers a second layer (8) of the fibrous web (6), having the following steps:
- arranging an electromagnetic transmitter (4) and an electromagnetic receiver (5) on the side of the first layer (7),
- irradiating the fibrous web (6) by using the transmitter (4) at at least one characteristic measuring wavelength (λM) and at at least one reference wavelength (λR), the second layer having different characteristic optical properties at the characteristic measuring wavelength (λM) from those at the reference wavelength (λR),
- picking up the measured signal (SM) sent back from the fibrous web (6) at the measuring wavelength (λM) and the reference signal (SR) sent back at the reference wavelength (λR) by using the receiver (5),
- determining the basis weight (FLG) by using the comparison of measured signal (SM) and reference signal (SR).

2. Method according to Claim 1, **characterized in that** the second layer (8) has a higher reflective capacity or absorption capacity at the measuring wavelength (λM) than at the reference wavelength (λR).

3. Method according to Claim 1 or 2, **characterized in that** the fibrous web is irradiated in a measuring wavelength range (λM) and/or in a reference wavelength range (λR).

4. Method according to one of Claims 1 to 3, **characterized in that** the measuring wavelength range (λM) lies between 570 and 590 nm.

5. Method according to one of Claims 1 to 4, **characterized in that** measuring wavelengths (λM) lie at 280 nm and at 310 nm.

6. Method according to one of Claims 1 to 5, **characterized in that** the measuring wavelength range (λM) lies in the IR spectral range.

7. Method according to one of Claims 1 to 6, **characterized in that** the reference wavelength range (λR) lies in the blue spectral range.

8. Method according to one of Claims 1 to 7, **characterized in that** the basis weight (FLG) is determined by using the formula FLG=A*exp(-YI*B), A and B being device-specific constants and YI being the value which is determined by means of comparison of reference signal (SR) and measured signal (SM).

9. Method according to one of Claims 1 to 8, **characterized in that** the value YI is determined by forming the ratio of reference signal (SR) and measured signal (SM).

10. Method according to one of Claims 1 to 9, **characterized in that** the value YI is determined from the standard colorimetric values Y and Z by using the formula YI~(Y-Z)/Y (yellowness index according to ASTM E-313 Standard).

11. Method according to one of Claims 1 to 9, **characterized in that** the value YI is determined from the standard colorimetric values X, Y and Z by using the formula YI~(Cx*X - Cy*Z)/Y, where Cx and Cy are device-specific constants.

12. Method according to one of Claims 1 to 11, **characterized in that** the basis weight (FLG) is determined by using status information and from machine parameters.

13. Method for controlling the basis weight (FLG) of a layer (7) of a fibrous web (6), the basis weight (FLG) being determined at a plurality of points in the MD and/or CD direction by using a method according to one of Claims 1 to 12, and a control unit (12, 13) outputting, inter alia, control signals (16, 17) to one or more actuators (14) on the basis of the basis weight (FLG) determined.

14. Control method according to Claim 13, **characterized in that** the actuator or the actuators (14) regulate the dilution water of the headbox and/or the setting of the baffles and/or lips of the headbox.

## Revendications

1. Procédé de détermination du grammage (FLG) d'une première couche (7) d'une bande de matière fibreuse (6), qui recouvre une seconde couche (8) de la bande de matière fibreuse (6), comportant les étapes suivantes:
- placer un émetteur électromagnétique (4) et un récepteur électromagnétique (5) sur la face de la première couche (7),
- irradier la bande de matière fibreuse (6) avec l'émetteur (4) avec au moins une longueur d'onde de mesure caractéristique (λ_{M}) et avec au moins une longueur d'onde de référence (λ_{R}), la seconde couche présentant d'autres propriétés optiques caractéristiques pour la longueur d'onde de mesure caractéristique (λ_{M}) que pour la longueur d'onde de référence (λ_{R}),
- enregistrer, avec le récepteur (5), le signal de mesure (S_{M}) réfléchi par la bande de matière fibreuse (6) pour la longueur d'onde de mesure (λ_{M}) et le signal de référence (S_{R}) réfléchi pour la longueur d'onde de référence (λ_{R}),
- déterminer le grammage (FLG) en utilisant la comparaison entre le signal de mesure (S_{M}) et le signal de référence (S_{R}) .

2. Procédé selon la revendication 1, **caractérisé en ce que** la seconde couche (8) présente un pouvoir de réflexion ou un pouvoir d'absorption plus élevé pour la longueur d'onde de mesure (λ_{M}) que pour la longueur d'onde de référence (λ_{R}).

3. Procédé selon la revendication 1 ou 2, **caractérisé en ce que** la bande de matière fibreuse est irradiée dans une plage de longueur d'onde de mesure (λ_{M}) et/ou dans une plage de longueur d'onde de référence (λ_{R}).

4. Procédé selon l'une quelconque des revendications 1 à 3, **caractérisé en ce que** la plage de longueur d'onde de mesure (λ_{M}) est comprise entre 570 et 590 nm.

5. Procédé selon l'une quelconque des revendications 1 à 4, **caractérisé en ce que** des longueurs d'onde de mesure (λ_{M}) valent environ 280 nm et environ 310 nm.

6. Procédé selon l'une quelconque des revendications 1 à 5, **caractérisé en ce que** la plage de longueur d'onde de mesure (λ_{M}) se situe dans le domaine spectral infrarouge.

7. Procédé selon l'une quelconque des revendications 1 à 6, **caractérisé en ce que** la plage de longueur d'onde de référence (λ_{R}) se situe dans le domaine spectral bleu.

8. Procédé selon l'une quelconque des revendications 1 à 7, **caractérisé en ce que** l'on détermine le grammage (FLG) en utilisant la formule FLG = A*exp(-YI*B), dans laquelle A et B sont des constantes spécifiques de l'appareil et YI est la valeur, qui est déterminée par comparaison du signal de référence (S_{R}) et du signal de mesure (S_{M}).

9. Procédé selon l'une quelconque des revendications 1 à 8, **caractérisé en ce que** l'on détermine la valeur YI en formant le quotient du signal de référence (S_{R}) et du signal de mesure (S_{M}).

10. Procédé selon l'une quelconque des revendications 1 à 9, **caractérisé en ce que** l'on détermine la valeur YI à partir des valeurs de couleur normalisées Y et Z par la formule YI ≈ (Y-Z)/Y (indice de jaune selon la norme ASTM E-313).

11. Procédé selon l'une quelconque des revendications 1 à 9, **caractérisé en ce que** l'on détermine la valeur YI à partir des valeurs de couleur normalisées X, Y et Z par la formule YI ≈ (Cx*X-Cy*2)/Y, dans laquelle Cx et Cy sont des constantes spécifiques de l'appareil.

12. Procédé selon l'une quelconque des revendications 1 à 11, **caractérisé en ce que** l'on détermine le grammage (FLG) en utilisant des informations d'état et des paramètres de la machine.

13. Procédé de régulation du grammage (FLG) d'une couche (7) d'une bande de matière fibreuse (6), dans lequel on détermine le grammage (FLG) en plusieurs points en direction MD et/ou en direction CD par un procédé selon l'une quelconque des revendications 1 à 12, et dans lequel une unité de régulation (12, 13) envoie des signaux de commande (16, 17) à un ou à plusieurs actionneurs (14) notamment sur la base du grammage déterminé (FLG).

14. Procédé de régulation selon la revendication 13, **caractérisé en ce que** le ou les actionneurs (14) régulent l'eau de dilution de la caisse de tête et/ou le réglage des diaphragmes et/ou des lèvres de la caisse de tête.
